# EUROPEAN PATENT SPECIFICATION

(11) **EP 0 847 732 B1**
(45) Date of publication and mention of the grant of the patent: **15.01.2003**
(21) Application number: 97500212.2
(22) Date of filing: 10.12.1997
(51) Int. Cl.: A61C 8/00, A61C 9/00, A61C 13/275

(54) **Improved mounting for implants**
Verbesserte Befestigungsvorrichtung für Implantate
Fixation améliorée pour implants

(30) Priority: 11.12.1996 ES 9603177 U
(43) Date of publication of application: 17.06.1998
(73) Proprietor: Grau I Subira, Josep Angel, 07003 Palma de Mallorca (ES)
(72) Inventor: Grau I Subira, Josep Angel, 07003 Palma de Mallorca (ES)
(74) Representative: Marques Alos, Fernando

(56) References cited:
- EP-A- 0 506 636
- EP-A- 0 680 732

## Description

The object of this invention, as is set out in the statement of this descriptive report, consists of a "MOUNTING FOR IMPLANTS", for carrying out different tasks in the field of prosthesis.

The mountings for implants are a combination of parts which offer the dentist or prosthesist a base for making implants.

Once in place, the mounting, solidly attached, will act as a support for teeth, molars or bridges, according to the patient's requirements.

The incorporation of a mounting for an implant starts out with the premise of a correct selection by the expert. This selection must be limited to those available on the market.

The EP-A-0 506 636 (D1) relates to a cylinder designated to be inserted in a temporary, implant-supported dental bridge/dental prosthesis, a so-called temporary cylinder, which comprises an upper part which is surrounded by the dental bridge/dental prosthesis and a base section for connection to the spacer element of the implant. The cylinder is made of a polymer material and the upper part has a conical outer contour.

To date, different mountings were needed: one for connection with the implant and taking the impression, another for measuring the height of the mucosa, another as a transepithelial to support the prosthesis, and on occasions the use of a connector or mounting for transfixing the prosthesis directly onto the implant.

The major drawback of conventional mountings for implants is in selecting them, given that, even when the best is chosen from those available on the market, this is sometimes insufficient as it does not adapt property to the prosthesis.

Similarly, in the event of making bridges directly onto the implant, fitting is sometimes difficult as there is no device for measuring deviations of angles of ready-integrated implants.

The new mounting for implants consist of a simplified set of components, which are sufficient to solve any prosthesis on implants.

The mounting may be produced for any implant system, as this promotes its philosophy of multi-functionality.

The main mounting is basically cylindrical in shape, with a bevelled protrusion in its lower area acting as a support shoulder, for different prosthetic and clinical uses.

It is provided with horizontal grooves which go half way down it, where a cutting area is marked for it to be separated, if applicable, from its upper part.

This upper part is wider than the middle area, it is cylindrical, and has a protrusion at the top to retain the paste for the impression and a flat, perpendicular face which always meets with the same flat face of one side of the implant hexagon. This mark goes down to the base in the form of a notch.

In the base of the mounting the hexagon, inner or outer, is reflected, or another anti-rotating mark, depending on the implant system to be resolved.

This base of the mounting with its hexagon is sufficiently conical for implants to be joined or splinted to each other.

The mounting has a clinical use as an impression abutment with anti-rotating reference of the exact position of the implant, as a measuring device for mucosa thanks to its horizontal grooves, as a modelling device for the gum when the impression is made, adding Moico wax or a similar plastic material as far as the shoulder or bevel of the base, as a transepithelial or even as a prosthetic abutment transfixed directly onto the implant.

Depending on the position of the implant, the prosthesis may be built in one single transfixed component or two, and the second may be cemented or screwed down.

Optionally, the new mounting for implants can incorporate an intermediate piece, designed for making bridges or bars for overdenture,

This piece consist of two holes at the sides with an approximate angle of 160° which adapts perfectly to the angle of curve of the teeth. Between the holes of adjacent pieces, rods are inserted, which will act as support for the teeth.

In the case of the external intermediate pieces, just one hole is made at the side. These pieces will be produced with different bases so that they fit into different types of transepithelial pieces and implants.

The method for connection of the titanium bar with the intermediate pieces will be adhesion, cementing or laser soldering, and the dental technician or dentist will be able to adapt, cut, bend o modify the bar, until it is inserted into the holes provided for this purpose in the intermediate pieces.

Similarly, it has a device for measuring angles, which consist of a bar soldered to a small, perpendicular tube, with a tubular component being provided on the bar, incorporating a flat protrusion, the end of which is angled, enabling the angles of insertion of the mounting for implants to be measured.

To this end, vertical rods must be screwed into the implants. The angle measuring device is fitted in the first of these, and the tubular component moves across the bar until it meets the second intermediate piece, and, with the angled, flat protrusion, observes the slope difference of the implant, to correct it.

Similarly, there is a base abutment or implant analogue, which has the new feature of a lower base of the same diameter as the burs of dental lathes or manual implements, and the mountings screwed down onto it can thus be milled or polished with comfort. At the top, it has protrusions at the sides, which prevent it from moving inside the model which will be used to make the prosthesis.

With the new mounting for implants, the prosthesis can be made onto implants simply and economically, as the number of parts required is reduced.

The new mounting for implants presents the advantage of being usable as a dental bridge or as a single abutment. The prosthesis can be built in one single transfixed component or two, and the latter can be cemented or screwed down.

The mounting for implants can be milled, set parallel, overcasting, soldered or cemented.

It is suitable for coating with resin, composite, low-melting porcelain in the case of overcasting in special gold, plating with porcelain specifically for titanium or any other dental material, the sole limitation of which is that 882°C must not be exceeded during the process, as it is made in commercially pure Titanium (Grade5).

Contrary to EP-A-0 506 636 (D1), this invention comprises a main mounting the top of which has various protrusions of the type used as abutment for making an impression characterized by having horizontal grooves for measuring the gum, said grooves locating only on the lower part of the main mounting.

The new mounting is characterized by, unlike the EP-A-0 506 636, incorporating a cutting-point groove at the central region of the main mounting, the groove being deeper than the other horizontal grooves and separating the top and the lower parts of the main mounting.

### DESCRIPTION OF THE SKETCHES

With a view to illustrating what we have set out so far, a sheet of sketches is attached to this descriptive report, forming an integral part of same, showing in a simplified, diagrammatic way, an example of production, solely for the purpose of illustration and not limitative of the practical possibilities of the invention.

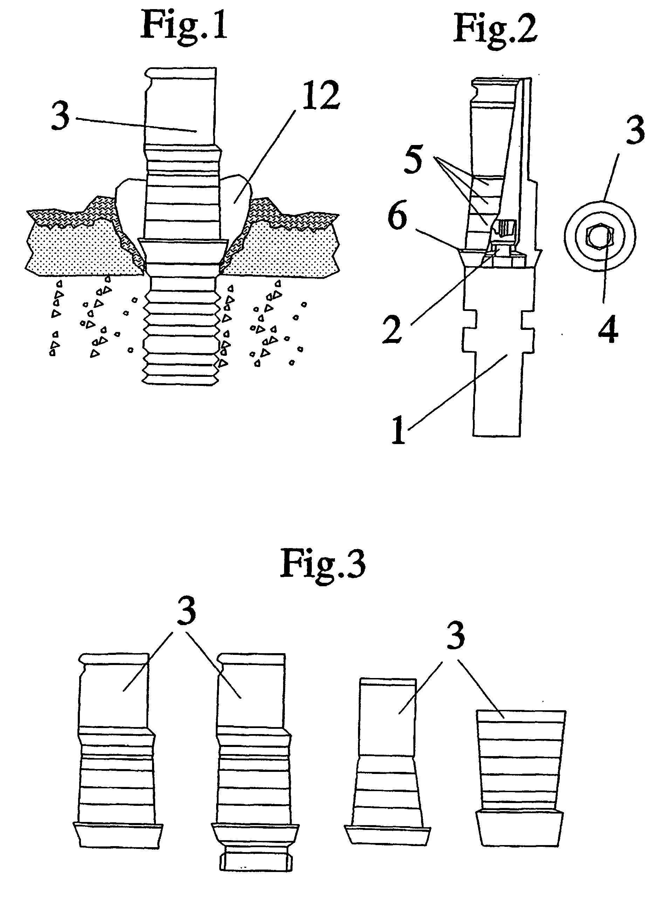

In these sketches, figure 1 a view of the new mounting for implants, where its positioning in the simulated gum of the patient's replica model can be seen.

Figure 2 is a sectioned view of the inside of the upper crown **main mounting**, showing the attachment screw with the lower implant analogue; similarly, beside this, there is a lower view of it with the hexagonal finish.

Figure 3 shows examples of the different variations the **main mounting** can adopt.

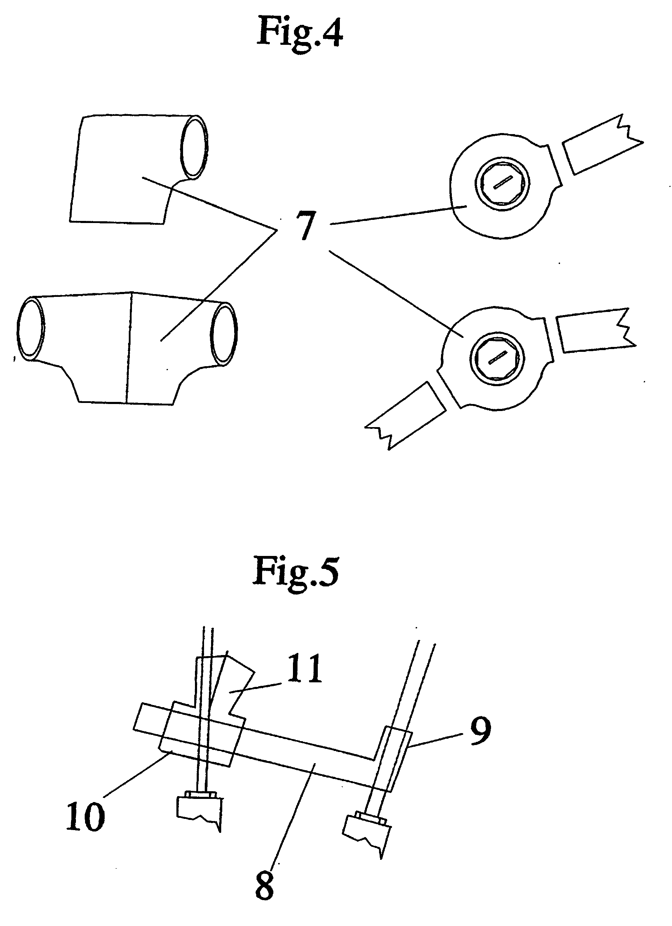

Figure 4 shows side and upper views of the intermediate piece in its two variations.

Figure 5 is a view of the angle measuring device of the new mounting for implants.

### DESCRIPTION OF A PRACTICAL APPLICATION

The new "MOUNTING FOR IMPLANTS" consist of a device made in Titanium, comprising a base abutment or implant analogue **(1),** an attachment screw **(2)** and a main mounting **(3).**

The base abutment **(1)** or implant analogue is cylindrical in shape at the bottom, with a diameter so that a dental lathe or manual implement can be inserted into (it), to mill or polish a screwed-down mounting.

It also has different protrusions at the sides, enabling perfect connection and attachment in the patient's plaster or similar model.

At the top, it has a hexagonal hole, designed for insertion of the attachment screw **(2)** which will form a connection bridge between the base abutment **(1)** and the main mounting **(3),** which likewise has a polygonal type finish **(4).**

The **main mounting (3)** presents a mainly cylindrical shape with a bevelled protrusion **(6)** in its lower area, which acts as a support for the Moico wax or similar plastic material **(12)**, provided with horizontal grooves **(5)** which enable measurement of the patient's gum and the retention of the dental cement, as well as a lower polygonal hole for perfect connection of it with the attachment screw **(2)**, and it is conical to assist the connection between non-parallel implants.

Optionally, it can incorporate an intermediate piece **(7)** for making bridges with two versions.

If the bridge implant is central, this piece has two holes at the sides with an approximate angle of 160°. Between the holes of adjacent intermediate pieces **(7)**, rods are inserted which will act as support to accommodate the dental bridge.

If the bridge implant is one of the ends, it has just one hole at the side.

Similarly, it has an angle measuring device, consisting of a bar **(8)** soldered to a small, perpendicular tube **(9)**, and a tubular component **(10)** is fitted on the bar **(8)**, incorporating a flat protrusion, the end of which is angled **(11)**, enabling the angles of insertion of the mounting for non-parallel implants to be measured.

The description to which the foregoing report refers having been given, it must be stressed that the details of execution of the idea set out may undergo minor alterations, always based on the fundamental principles of the idea, which are essentially those set out in the paragraphs of the description given.

In effect, the current Patents Act establishes that changes of shape, dimensions, proportions and materials of an object already patented are not patentable, thereby establishing the legislator's criteria to the extent that, once an idea which could give rise to a practical, industrializable reality has been patented, no-one may base himself on same in order, on the pretext of having introduced slight modifications, to present this as new and his own.

Having established the concept set out, there follows the note of claims, thereby summarizing the new areas to be claimed:

### NOTE

In sum, the privilege of exclusive exploitation applied for will be based on the following claims:

## Claims

1. **A** MOUNTING FOR IMPLANTS for carrying out different tasks in the field of prosthesis, comprising a main mounting **(3),** an attachment screw **(2) for fastening the main mounting (3)** to a base abutment **(1)** or implant analogue or **dental** implant, main mounting **(3) forming** a conical-cylindrical shape **and having** a bevelled edge **(6) at the bottom of said main mounting, characterized by:** various protrusions **at the top of said main mounting configured to be** used as abutment for making an impression, **horizontal** grooves **(5) for measuring the gum, said grooves locating only on the lower part of the main mounting (3)**, ending in the central area, **and that the mounting further comprises a cutting-point groove at the central region of the main mounting, the groove being deeper than the other horizontal grooves and separating the top and lower parts of the main mounting**, the lower part adapted to be as a prosthetic transepithelial, whilst the lower part for connection with the base abutment **(1)** or implant analogue is conical and ends in a polygonal shape **(4)**.

2. MOUNTING FOR IMPLANTS according to claim 1, **characterized in that** it can optionally incorporate an intermediate piece **(7)** for making bridges, the lower base of which is conical and varying in shape, depending on the type of implant or transepithelial, there being two versions: those fitted in intermediate areas with two holes at the sides with an approximate angle of 160°, between which standardized connection bars for solid Titanium implants are inserted, and attachment of them can be assured using special cements, laser soldering or any appropriate attachment system, whilst the ends have just one hole at the side.

3. MOUNTING FOR IMPLANTS according to one of the preceeding claims, **characterized in that** it has an angle measuring device, comprising a bar **(8)** soldered to a small, perpendicular tube **(9),** and this bar **(8)** is provided with a tubular component **(10)** which has a flat protrusion, the end of which is angled **(11).**

4. MOUNTING FOR IMPLANTS according to one of the preceeding claims, comprising a base abutment **(1)** or implant analogue, which fits into its top part with the polygonal base **(4)** of the main mounting **(3),** fastening the attachment screw **(2),** by a threading tap provided in its upper part, and the said base abutment **(1)** or implant analogue after the retentions in the middle area, is **characterized in that** it becomes a cylinder of an appropriate diameter for rotary instruments, dental lathes or hand implements.

## Revendications

1. Un DISPOSITIF POUR IMPLANTS destiné à la réalisation de différentes tâches dans le domaine de la prothèse, constitué d'un support principal (3), d'un tenon de fixation (2) servant à fixer le support principal (3) à un pilier de base (1), analogue d'implant ou implant dentaire. Le support principal (3) présente une forme conique-cylindrique avec un bord chanfreiné (6) dans sa partie inférieure et se **caractérise par** la présence de : plusieurs protrusions sur sa partie supérieure afin de servir de pilier pour la prise d'empreintes ; de stries horizontales (5) pour la mesure des gencives, lesdites stries n'étant présentes que dans sa partie inférieure ; et d'une.strie centrale de point de coupe plus profonde que les autres stries horizontales qui sépare la partie supérieure du support principal de sa partie inférieure, cette dernière étant conçue pour servir de transépithélium prothétique, alors que sa base inférieure d'union au pilier de base (1) ou analogue d'implant est dotée d'une conicité s'achevant en forme de polygone (4).

2. DISPOSITIF POUR IMPLANTS, conforme à la revendication 1, **caractérisé par** le fait de pouvoir y incorporer, de façon optionnelle, une pièce intermédiaire (7) pour la réalisation de ponts, dont la partie inférieure est conique, mais dont la forme varie en fonction du type de prothèse ou de transépithélium. Il en existe deux versions : celles disposées dans des zones intermédiaires portent deux orifices latéraux avec un angle approximatif de 160°, entre lesquels sont introduites des barres standardisées d'union d'implants en Titane massif, dont la fixation peut être assurée grâce à des ciments spéciaux, la soudure au laser ou tout autre système de fixation approprié, alors que celles des extrémités ne portent qu'un seul orifice latéral.

3. DISPOSITIF POUR IMPLANTS, conforme à la revendication précédente, **caractérisé par** l'incorporation d'un dispositif de mesure d'angles constitué d'une barre (8) soudée à un petit tuyau perpendiculaire (9) sur laquelle se trouve un élément tubulaire (10) présentant une protrusion plate dont l'extrémité est angulaire (11).

4. DISPOSITIF POUR IMPLANTS, conforme à l'une des revendications précédentes, constitué d'un pilier de base (1) ou analogue d'implant, dont la partie supérieure vient s'emboîter dans la base polygonale (4) du support principal (3), fixant le tenon de fixation (2) au moyen d'un filetage présent dans sa partie supérieure, et ce pilier de base (1) ou analogue d'implant, après les butées du centre, se caractérisant par le fait de se convertir en un cylindre de diamètre approprié pour instruments giratoires, treuils dentaires ou pièces manuelles.

## Patentansprüche

1. A, "EINSATZ FÜR IMPLANTATE" für verschiedene Anforderungen im Bereich der Zahnprothetik. Er besteht aus dem Implanatpfosten (3), der Befestigungsschraube (2) zur Befestigung des Implanatpfostens (3) an einem Implanatkörper (1) oder einem analogen Implantat oder einem Zahnimplantat, dem Implanatpfosten (3), und bildet eine konisch-zylindrische Form mit einer abgeschrägten Kante (6) am unteren Rand des genannten Implanatpfostens. Er hat oben am Hauptkörper mehrere Vorsprünge, die als Pfeiler bei der Anfertigung von Abdrücken dienen. Er hat horizontale Rillen (5), mit denen das Zahnfleisch gemessen wird. Diese Rillen befinden sich nur auf dem unteren Teil des Implanatpfostens (3). Außerdem verfügt das Implanat in der Mitte des Hauptkörpers über eine Rille als Schnittstelle. Diese Rille ist tiefer als die anderen waagrechten Rillen und trennt die oberen von den unteren Teilen des Hauptkörpers, die als prothetisches Transepithel verwendet werden, während der untere Teil zur Verbindung mit dem Implanatkörper (1) oder einem analogen Implantat konisch ist und polygonal (4) endet.

2. "EINSATZ FÜR IMPLANTATE" gemäß Patentanspruch 1 kann auf Wunsch ein Mittelteil (7) für die Anfertigung von Brücken einschließen. Der untere Teil ist konisch und hat je nach der Art des Implantats oder des Transepithelials verschiedene Formen. Es gibt zwei verschiedene Ausführungen: die für den Zwischenbereich mit zwei Löchern an den Seiten mit einem Winkel von ungefähr 160°, zwischen denen standardisierte Verbindungsgestänge für Implantate aus reinem Titanium eingesetzt werden. Diese können mit einem Spezialzement befestigt werden, oder mittels Laser gelötet werden oder mit jedem anderen geeigneten Befestigungssystem befestigt werden, während die Enden nur ein Loch auf der Seite haben.

3. "EINSATZ FÜR IMPLANTATE". Er verfügt über eine Vorrichtung zur Vermessung des Winkels. Er hat ein Gestänge (8), das an eine schmale, lotrechte Röhre (9) angelötet ist, und dieses Gestänge (8) verfügt über ein röhrenförmiges Teil (10), das einen flachen, am Ende abgewinkelten Vorsprung (11) hat.

4. "EINSATZ FÜR IMPLANTATE". Entsprechend einem der obigen Patentansprüche besteht dieser aus einem Implanatkörper (1) oder einem analogen Implantat, das mit der polygonalen Basis (4) in den oberen Teil des Implanatpfostens (3) passt, wobei die Befestigungsschraube (2) mit einem Gewinde im oberen Teil befestigt wird. Der genannte Implanatkörper (1) oder das analoge Implantat, nach den Retentionen im mittleren Bereich, wird durch die Tatsache gekennzeichnet, dass es zu einem Zylinder mit einem Durchmesser, der für rotierende Instrumente, Zahnbohrer oder manuelle Instrumente geeignet ist, wird.
